Europäisches Patentamt

European Patent Office

Office européen des brevets

(19)

(11) Veröffentlichungsnummer: **0 008 441**
**B1**

(12) **EUROPÄISCHE PATENTSCHRIFT**

(45) Veröffentlichungstag der Patentschrift:
16.12.81

(21) Anmeldenummer: 79102986.1

(22) Anmeldetag: 16.08.79

(51) Int. Cl.³: **H 05 B 1/02,** G 05 D 23/19,
F 24 C 15/10

(54) **Steuergerät für Elektrokochgeräte.**

(30) Priorität: 23.08.78 DE 2836882

(43) Veröffentlichungstag der Anmeldung:
05.03.80 Patentblatt 80/5

(45) Bekanntmachung des Hinweises auf die Patenterteilung:
16.12.81 Patentblatt 81/50

(84) Benannte Vertragsstaaten:
AT CH FR GB IT SE

(56) Entgegenhaltungen:
DE-A-2 504 896
DE-A-2 257 647
DE-A-2 310 867
DE-A-2 331 937
DE-A-2 362 462
DE-A-2 625 715
DE-A-2 731 782
FR-A-1 561 786
GB-A-1 003 194

(73) Patentinhaber: E.G.O. Regeltechnik GmbH,
D-6833 Waghäusel (DE)

(72) Erfinder: Kicherer, Robert, im Bergfeld 33,
D-7134 Knittlingen (DE)

(74) Vertreter: Patentanwälte Ruff und Beier et al,
Neckarstrasse 50, D-7000 Stuttgart 1 (DE)

BUNDESDRUCKEREI BERLIN

## Steuergerät für Elektrokochgeräte

Die Erfindung betrifft ein Steuergerät für Elektrokochgeräte mit einem einstellbaren quantelnden Leistungssteuergerät, das im wesentlichen stufenlos einstellbar ist und die Leistung des Elektrokochgerätes getaktet in einzelnen Leistungsimpulsen zuführt, das ein Ausdehnungselement mit einer elektrischen Beheizung enthält, und mit einem Zeitschaltglied, das in der Ankochphase für eine Zeit die am Leistungssteuergerät eingestellte Leistung erhöht.

Ein derartiges Steuergerät ist bekannt (DE-A-2 362 462). Bei diesem Steuergerät ist das Zeitschaltglied mechanisch aufgebaut. Das Einschalten des Zeitschaltgliedes und somit die Erhöhung der Leistung wird dabei dadurch erreicht, daß das Einstellelement für die Leistung nicht nur gedreht, sondern auch eingedrückt werden kann. Bei seinem Eindrücken setzt es die Ankochautomatik in Gang. Außer gewissen mechanischen Schwierigkeiten und der Tatsache, daß der Knopf einen gewissen Hub benötigt, erfordert die Einschaltung der Ankochautomatik einen zusätzlichen Arbeitsgang, so daß sie häufig nicht verwendet wird.

Aufgabe der vorliegenden Erfindung ist es, bei einem Steuergerät der eingangs genannten Art den Aufbau, die Anordnung des Steuergeräts an einem Herd oder einer Kochmulde sowie die Bedienung weiter zu vereinfachen.

Diese Aufgabe wird erfindungsgemäß dadurch gelöst, daß das Zeitschaltglied einen elektronischen Zähler als Zeitglied und wenigstens einen Teiler enthält, der über ein Elektronisches Schaltelement die der Beheizung zugeführte Leistung in einem vorgegebenen Teilungsverhältnis erniedrigt, wobei das Zeitschaltglied von dem manuell betätigbaren Einstellelement beim Einstellen einer Leistung in einem unteren Leistungsbereich automatisch einschaltbar und beim Überschreiten der Grenze zum höheren Leistungsbereich automatisch ausschaltbar ist.

Durch die Verwendung elektronischer Bauelemente fällt die gesamte Mechanik für das Zeitschaltglied und den Leistungsschalter weg, da das elektronische Schaltelement lediglich die sehr geringe Leistung der Bimetallbeheizung für das Leistungssteuergerät schalten muß. Gleichzeitig wird aber für die Schaltung der hohen Kochplattenleistung das zuverlässige quantelnde Leistungssteuergerät beibehalten. Dadurch wird die Anordnung und der Aufbau vereinfacht. Die Bedienung wird dadurch vereinfacht, daß die Bedienungsperson keinen gesonderten Knopf mehr zu betätigen braucht. Da die Ankochautomatik ohnehin nur im Fortkochbereich sinnvoll ist, wird sie durch die von der Erfindung vorgeschlagenen Maßnahmen im Bratbereich automatisch ausgeschaltet, was ebenfalls zur Vereinfachung der Bedienung beiträgt. Die Ausschaltung erfolgt nicht nur, wenn vom Fortkochbereich in den Bratbereich geschaltet wird, sondern auch in umgekehrter Richtung, so daß beim Herunterschalten vom Bratbereich in den Fortkochbereich die Ankochautomatik nicht mehr wirksam wird. Sie ist in diesem Falle auch nicht mehr erforderlich, weil ja die Kochplatte bereits im Bratbereich, d. h. im höheren Leistungsbereich gearbeitet hat. Auf diese Weise läßt sich auch eine bewußte Ausschaltung der Ankochautomatik erzielen, indem das Einstellelement entweder von unten her kurz über diese Grenze herübergeschaltet und wieder zurück in den Fortkochbereich geschaltet wird, oder die Einstellung gleich von Null über den höheren Leistungsbereich in den Fortkochbereich hinein erfolgt.

Dies führt dazu, daß bei einer vorteilhaften Ausführungsform das Einstellelement ein bekannter drehbarer Einstellknopf sein kann, bei dessen Drehung von der Nullstellung in die Richtung ansteigender Leistung das Zeitschaltwerk einschaltbar ist, während bei Drehung in der entgegengesetzten Richtung keine Einschaltung des Zeitschaltwerks erfolgt.

Bei bevorzugten Ausführungsformen kann zwischen der Nullstellung und der niedrigsten Leistungsstufe ein Kontaktgeber zur Erzeugung eines Einschaltimpulses für das Zeitschaltwerk betätigbar sein und/oder zwischen dem unteren und dem oberen Leistungsbereich (Fortkoch- und Bratbereich) ein eventuell ohnehin vorhandener Kontakt einen Ausschaltimpuls für das Zeitschaltwerk erzeugen. Beim Einstellen aus »0« heraus in Richtung erhöhter relativer Einschaltdauer wird der Kontakt vor Stufe 1 über Schaltnocken nur kurz angetippt, d. h. es darf kein Dauerkontakt geben, da sonst nach Ablauf der Ankochzeit diese sich nicht abschalten würde.

Beim Weiterdrehen von dem Fortkochbereich F in den Bratbereich B wird neben der Änderung des Teilungsverhältnisses auch noch die vorhandene Restankochzeit gelöscht, in dem über den Nocken der Schalter über den gesamten Bratbereich geschlossen bleibt.

Ein Ausführungsbeispiel der Erfindung ist in der Zeichnung dargestellt und wird im folgenden näher erläutert. Es zeigt

Fig. 1 ein schematisches Schaltbild eines Steuergerätes nach der Erfindung,

Fig. 2 ein Diagramm der der Beheizung des Leistungssteuergerätes zugeführten Leistungsimpulse in drei verschiedenen Arbeitszuständen des Steuergerätes nach der Erfindung (a bis c), und

Fig. 3 ein schematisches Diagramm des Leistungsverlaufes in Abhängigkeit von der von 1 bis 12 geteilten Leitungseinstellung, wobei in Fig. 2 und Fig. 3 jeweils die gleiche Strichart für die einzelnen Arbeitsweisen gewählt sind.

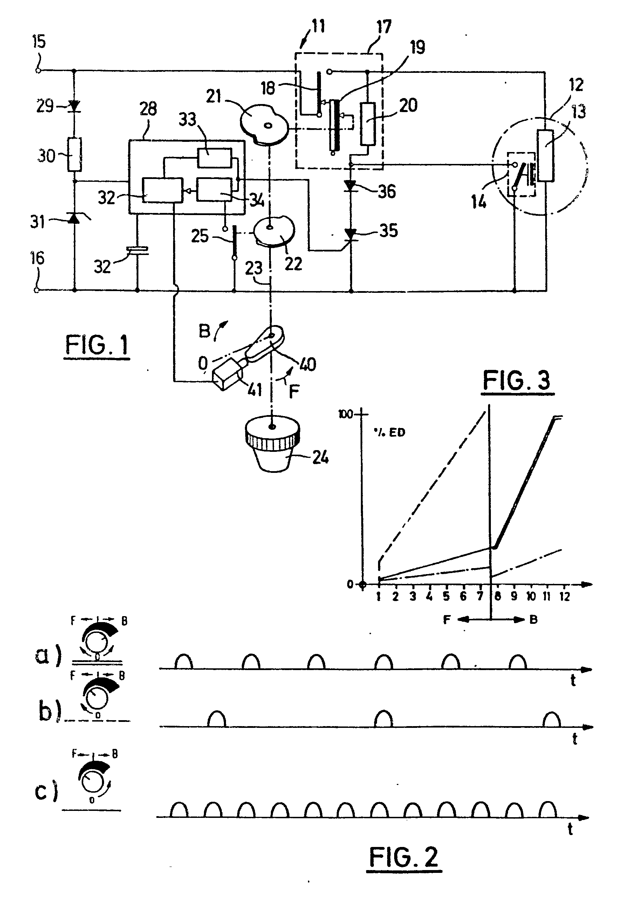

In Fig. 1 ist ein Steuergerät 11 dargestellt, das zur Leistungssteuerung einer elektrischen Kochplatte 12 vorgesehen ist, die einen Verbraucher-Heizwiderstand 13 und einen Temperaturschutzschalter 14 aufweist. Das Steuergerät 11 ist über Anschlüsse 15, 16 an das Haushaltsstromnetz gelegt und weist ein herkömmliches quantelndes Leistungssteuergerät 17 auf, das in einen Anschluß des Verbraucher-Heizwiderstandes 13 geschaltet ist und diesem die Leistung gequandelt, d. h. in Leistungsimpulsen, zuführt, deren relative Einschaltdauer von der Einstellung des Leistungssteuergerätes und seiner Beheizung abhängig ist. Das mechanisch/thermisch arbeitende Leistungssteuergerät enthält einen Schnappschalter 18, der von einem Ausdehnungsglied, beispielsweise einem Bimetall 19, betätigt wird. Dieses ist mit einer Beheizung 20 versehen und über eine Einstellkurve 21 in seiner relativen Lage zum Schalter 18 einstellbar.

Die Beheizung 20 ist parallel zum Verbraucher-Heizwiderstand 13, d. h. als Spannungswicklung, geschaltet und kann relativ hoch ausgelegt werden, beispielsweise auf eine Leistung von 20 Watt, wodurch es auch bei höheren Netzspannungen einfach herstellbar ist.

Die Einstellkurve 21 ist zusammen mit einer Schaltkurve 22 an einer Einstellwelle 23 angebracht, die über einen Einstellknebel 24 manuell drehbar ist. Die Schaltkurve 22 betätigt einen Schaltkontakt 25, der im oberen Leistungsbereich (Bratbereich B) geschlossen ist.

Auf der Einstellwelle 23 ist ferner ein Schaltnocken 40 angeordnet, der einen Kontaktgeber 41 betätigen kann, der zum Schaltnocken 40 so angeordnet ist, daß er in später noch zu erläuternder Weise am Beginn des Kochbereiches betätigbar ist.

Der Kontaktgeber 41 erzeugt einen Einschalt- und der Kontakt 25 unter anderem einen Ausschaltimpuls, die den Zähler 32 ein- oder ausschalten können. Der Kontaktgeber 41 kann ein einfacher Schaltkontakt sein.

Das Steuergerät 11 enthält ferner einen integrierten Schaltkreis (IC) 28, der über eine Brückenschaltung einer Diode 29 mit einem Widerstand 30 einerseits und einer Zehnerdiode 31 andererseits mit der entsprechenden Niederspannung vom Netz her versorgt wird. Zur Stromversorgung gehört ferner ein Kondensator 32.

Der IC enthält einen elektronischen Zähler 32 und zwei Teiler 33, 34, die als Baugruppen in Blockschaltweise angedeutet sind. Der Zähler bildet ein Zeitglied, d. h., daß er durch Zählung der Netzhalbwellen eine vorgegebene Zeit von beispielsweise 9 Minuten ablaufen läßt, bevor er ein Ausgangssignal an den ihm zugeordneten Teiler 33 gibt. Der Zähler 32 wird durch den Einschalt-Kontaktgeber 41 in Gang gesetzt, während der den Teiler 34 steuernde Kontakt 25 den Zähler 32 auch vor Ablauf seiner Laufzeit abschalten kann. Von den Teilern führt die Ausgangsleitung des IC zu einem Thyristor 35, der in Reihe mit der Beheizung 20 des Leistungssteuergerätes 17 geschaltet ist. Mit ihm in Reihe ist eine Diode 36 geschaltet, die als Schutz gegen Überspannungen dient.

Der Teiler 33 ist derart ausgelegt, daß er während des Laufens des Zählers 32 den Thyristor 35 so steuert, daß dieser nur jede 5. Halbwelle des Netzstromes durchläßt, während der Teiler 34 derart ausgelegt ist, daß er, wenn er durch Schließen des Kontaktes 25 eingeschaltet ist, den Thyristor zum Durchlassen jeder zweiten Halbwelle des Wechselstromes steuert.

Das in Fig. 1 dargestellte Steuergerät wird nachfolgend, auch anhand der Fig. 2 und 3, in seiner Wirkungsweise erläutert:

In den Fig. 2 und 3 bedeutet die einfach durchgezogene Linie ein Arbeiten ohne Ankochautomatik im Fortkochbereich F (Fig. 2c), die strichlierte Linie ein Arbeiten im Fortkochbereich mit Ankochautomatik (Fig. 2b) und die doppelte Linie ein Arbeiten im Bratbereich, also dem höheren Leistungsbereich (Fig. 2a). Die strichpunktierte Linie bedeutet die in Fig. 2 nicht erläuterte Leerlaufbegrenzung nach Ansprechen des Temperaturschutzschalters 14.

Wenn, wie in Fig. 2a dargestellt, der Einstellknebel 24 in den Bratbereich gedreht wird, und zwar gleichgültig in welcher Drehrichtung, so wird der Kontakt 25 geschlossen. Der Teiler 34 wird in Gang gesetzt und sorgt dafür, daß der Thyristor 35 nur jede zweite Halbwelle des Wechselstroms durchläßt, so daß die Auslegungsleistung der Beheizung 20 nur noch zu einem Viertel wirksam wird, d. h. eine Effektivleistung von 5 Watt bei 20 Watt Auslegungsleistung vorliegt. In diesem oberen Leistungsbereich (Bratbereich) ist keine Ankochautomatik eingeschaltet, weil der Nocken 40 bei Drehung von der Nullstellung auf kürzestem Wege zur obersten Leistung (in der Zeichnung entgegen dem Uhrzeigersinn) einerseits den Einschalt-Kontaktgeber 41 nicht passiert hat und andererseits der geschlossene Kontakt 25 den Zähler 32 ausgeschaltet hält. Bei Drehung im Uhrzeigersinne, auf den gleichen Leistungswert, d. h. durch den unteren Leistungsbereich (Fortkochbereich F) hindurch, war zwar zuerst durch den Einschalt-Kontaktgeber 41 der Zähler eingeschaltet, dann jedoch durch Schließen des Kontaktes 25 der Zähler 32 wieder rückgestellt worden.

In Fig. 2b ist eine Leistung im Fortkochbereich F eingestellt worden, und zwar, wie angedeutet, durch Drehung im Uhrzeigersinn, d. h. von der Nullstellung aus über die niedrigste Leistungsstellung hinweg. Zwischen der Nullstellung und der niedrigsten Leistungseinstellung wird jedoch von dem Schaltnocken 40 der Einschalt-Kontaktgeber 41 betätigt, der über die Schalteinrichtung 27 den Zähler 32 in Gang setzt. Dieser ist angelaufen und hat den Teiler derart aktiviert, daß der Thyristor 35 nur noch jede 5. Halbwelle durchläßt, d. h. nur noch 10% der Auslegungsleistung bzw. 20% derjenigen Leistung, die normalerweise der Beheizung 20 im Fortkochbereich zugeführt wird (Fig. 2c). Dadurch dauert das Aufheizen des Bimetalls 19 wesentlich länger und die relative Einschaltdauer wird um etwa das Fünffache vergrößert. Das bedeutet also, daß, während der Zähler 32 läuft, die jeweils am Knebel 24 eingestellte Leistung um das Fünffache vergrößert wird (strichlierte Linie in Fig. 3). Bei konstanter Zeit dieser Ankochunterstützung wird also eine um einen festen Betrag erhöhte Leistung zugeführt, die jedoch abhängig von der Einstellung des Steuergerätes ist. Auch hier ist die Verlustleistung sehr gering. Sie kann maximal 2 Watt betragen.

Nach Ablauf der am Zähler 32 eingestellten oder fest einprogrammierten Zeit wird die Ankochautomatik abgeschaltet und der Thyristor 35 läßt nunmehr jede positive oder negative Halbwelle des Wechselstroms durch, so daß die Beheizung 20 des Bimetalls 19 mit 10 Watt beheizt wird. Die der Kochplatte 12 zugeführte Leistung geht also auf 1/5 der Leistung zurück, die bei der Ankochautomatik durchgelassen wurde (durchgezogene Linie in Fig. 3).

Wie in Fig. 2c dargestellt ist, wird die gleiche Wirkung erreicht, wenn der Einstellknebel 24 entgegen dem Uhrzeigersinn in den Fortkochbereich gedreht wird, d. h., durch den Bratbereich hindurch im Sinne einer niedriger werdenden Leistungseinstellung. Dabei wird der Einschalt-Kontaktgeber 41 von dem Schaltnocken 40 nicht passiert und das Steuergerät arbeitet ohne Ankochautomatik. Die gleiche Wirkung erreicht man auch, wenn man bei Drehung des Knebels im Uhrzeigersinne, d. h. im Sinne steigender Leistung, die Grenze zwischen dem Fortkochbereich F und dem Bratbereich B passiert und dann in den Fortkochbereich zurückdreht. Dabei wird dann zwar zuerst die Ankochautomatik (Zähler 32 und Teiler 33) eingeschaltet, jedoch nach Passieren der Grenze zwischen F und B wieder ausgeschaltet.

Es ist also zu erkennen, daß durch die Erfindung eine sehr sinnfällige Betätigung des Steuergerätes möglich ist. Bei normaler Einstellung einer Leistung im Fortkochbereich wird in der Regel ein kaltes Kochgut vorliegen, so daß die Ankochautomatik mit einer zeitlich begrenzten Leistungserhöhung sinnvoll ist. Wird dagegen, beispielsweise nach einem Anbratvorgang, die Leistung vom Bratbereich in den Fortkochbereich herunter geregelt, so wird dann die automatische Leistungserhöhung, die störend wäre, abgeschaltet. Diese Art der Betätigung berücksichtigt ferner automatisch die Arbeitsweise in Unkenntnis der Funktion der Ankochautomatik. Wenn jemand, wie es bei einer üblichen Siebentakt-Schaltung notwendig ist, die Leistung zum Ankochen zuerst hoch einstellt, d. h. in den Bratbereich und dann, nachdem das Kochgut erwärmt ist, in den Ankochbereich herunterregelt, so bleibt wunschgemäß die Ankochautomatik außer Funktion.

Es wird ein Steuergerät geschaffen, das mit einem Minimum an mechanischem Aufwand herstellbar ist, und trotzdem den elektronischen Bauelementen keine hohen Schaltleistungen zumutet. Die Erfindung ist mit dem in Fig. 1 dargestellten Steuergerät mit elektronischer Regelung und mechanisch-thermischer Leistungsschaltung besonders vorteilhaft verwendbar. Sie kann jedoch auch bei Leistungssteuergeräten eingesetzt werden, die rein mechanisch oder rein elektronisch arbeiten.

## Patentansprüche

1. Steuergerät (11) für Elektrokochgeräte (12), mit einem einstellbaren quantelnden Leistungssteuergerät (17), das im wesentlichen stufenlos einstellbar ist und die Leistung des Elektrokochgerätes (12) getaktet in einzelnen Leistungsimpulsen zuführt, das ein Ausdehnungselement mit einer elektrischen Beheizung (20) enthält, und mit einem Zeitschaltglied, das in der Ankochphase für eine Zeit die am Leistungssteuergerät (17) eingestellte Leistung erhöht, dadurch gekennzeichnet, daß das Zeitschaltglied einen elektronischen Zähler (32) als Zeitglied und wenigstens einen Teiler (33) enthält, der über ein elektronisches Schaltelement die der Beheizung (20) zugeführte Leistung in einem vorgegebenen Teilungsverhältnis erniedrigt, wobei das Zeitschaltglied (32, 33) von dem manuell betätigbaren Einstellelement (24) beim Einstellen einer Leistung in einem unteren Leistungsbereich (Fortkochbereich F) automatisch einschaltbar und beim Überschreiten der Grenze zum höheren Leistungsbereich (Bratbereich B) automatisch ausschaltbar ist.

2. Steuergerät nach Anspruch 1, dadurch gekennzeichnet, daß das Einstellelement (24) ein bekannter drehbarer Einstellknopf ist, bei dessen Drehung von der Nullstellung in die Richtung ansteigender Leistung das Zeitschaltwerk (32, 33) einschaltbar ist, während bei Drehung in der entgegengesetzten Richtung keine Einschaltung des Zeitschaltwerks (32, 33) erfolgt.

3. Steuergerät nach einem der vorhergehenden Ansprüche, dadurch gekennzeichnet, daß zwischen der Nullstellung und der niedrigsten Leistungsstufe ein Kontaktgeber (41) zur Erzeugung eines Einschaltimpulses für das Zeitschaltwerk (32, 33) betätigbar ist.

4. Steuergerät nach einem der vorhergehenden Ansprüche, dadurch gekennzeichnet, daß ein zwischen dem unteren und dem oberen Leistungsbereich (Fortkochbereich F und Bratbereich B) betätigbarer Kontakt (25) einen Ausschaltimpuls für das Zeitschaltwerk (32, 33) erzeugt.

## Claims

1. Control instrument (11) for electric cookers (12) with an adjustable quantizing power control device (17), which is substantially continuously adjustable and supplies the power of the electric cooker (12) in the form of individual power pulses, containing an expansion member with an electrical heating means (20) and with a time switch which, in the initial cooking phase, increases for a period of time the power set on the power control device (17), characterized in that the time switch contains an electronic counter (32) as the timing member and at least one divider (33) which, by means of an electronic switch element, reduces the power supply to the heating means in a predetermined division ratio, it being possible to automatically switch on the time switch (32, 33) by means of the manually operable adjusting means (24) on setting a power level in a lower power range (continuous cooking range F) and to automatically switch off said time switch on exceeding the limit towards the higher power range (frying range B).

2. Control instrument according to claim 1, characterized in that the adjusting means (24) is a known rotatable knob which switches on the time switch (32, 33) on turning from the off position in the direction of rising power, whilst on turning in the opposite direction it does not switch on the time switch (32, 33).

3. Control instrument according to one of the preceding claims, characterized in that a contactor (41) for producing a switching-on pulse for the time switch (32, 33) is operable between the off position and the lowest power stage.

4. Control instrument according to one of the preceding claims, characterized in that a contact (25) operable between the lower and upper power ranges (continuous cooking range F and frying range B) produces a switching-off pulse for the time switch (32, 33).

## Revendications

1. Dispositif de commande (11) pour des appareils (12) de cuisson électrique, comportant un dispositif (1) de commande de puissance réglable déterminant la valeur de l'énergie appliquée, qui peut être réglé pratiquement sans paliers, applique l'énergie à l'appareil de cuisson électrique (12) de façon cadencée sous la forme d'impulsions d'energie individuelles et comporte un élément qui se dilate et comprend un dispositif de chauffage électrique (20), ainsi qu'un interrupteur à minuterie qui dans la phase de cuisson initiale augmente pendant un certain temps l'énergie réglée au niveau du dispositif de commande de puissance (17), caractérisé en ce que l'interrupteur à minuterie comporte un compteur électronique (32) en tant qu'élément de minuterie et au moins un diviseur (33) qui, par l'intermédiaire d'un commutateur électronique, réduit l'énergie appliquée au dispositif de chauffage (20), dans un rapport de division prédéterminé, l'interrupteur à minuterie (32, 33) pouvant être mis en circuit automatiquement par l'élément de réglage (24) qui peut être actionné manuellement lors du réglage d'une énergie dans une gamme d'énergie basse (gamme de cuisson continue F), et pouvant être mis hors circuit automatiquement par l'élément de réglage (24) lors du dépassement de la limite vers la gamme d'énergie supérieure (gamme de cuisson vive B).

2. Dispositif suivant la revendication 1, caractérisé en ce que l'élément de réglage (24) est un bouton de réglage tournant connu dont la rotation, à partir de la position zéro, dans un sens qui augmente l'énergie, peut provoquer la mise en circuit de l'interrupteur à minuterie (32, 33), tandis que sa rotation dans le sens opposé ne provoque pas la mise en circuit de l'interrupteur à minuterie (32, 33).

3. Dispositif suivant l'une quelconque des revendications 1 et 2, caractérisé en ce qu'entre la position zéro et le palier d'energie le plus faible, un contacteur (41) est actionnable pour délivrer une impulsion de mise en circuit pour l'interrupteur à minuterie (32, 33).

4. Dispositif suivant l'une quelconque des revendications 1 à 3, caractérisé en ce qu'un contact (25) qui est actionnable entre les gammes d'énergie inférieure et supérieure (gamme de cuisson continue F et gamme de cuisson vive B) délivre une impulsion de mise hors circuit pour l'interrupteur à minuterie (32, 33).

FIG.1

FIG.3

FIG.2